**Europäisches Patentamt**

**European Patent Office**

**Office européen des brevets**

(19)

(11) Veröffentlichungsnummer: **0 091 557**
**B1**

(12) **EUROPÄISCHE PATENTSCHRIFT**

(45) Veröffentlichungstag der Patentschrift:
**13.08.86**

(21) Anmeldenummer: **83102223.1**

(22) Anmeldetag: **07.03.83**

(51) Int. Cl.⁴: **B 65 G 35/00**

(54) **Vorrichtung zum Herstellen einer Verbindung zwischen jeweils zwei von mehreren Stationen.**

(30) Priorität: **08.04.82 CH 2202/82**

(43) Veröffentlichungstag der Anmeldung:
**19.10.83 Patentblatt 83/42**

(45) Bekanntmachung des Hinweises auf die Patenterteilung:
**13.08.86 Patentblatt 86/33**

(84) Benannte Vertragsstaaten:
**AT BE DE FR GB IT NL SE**

(56) Entgegenhaltungen:
**EP-A-0 019 599**
**CH-A-626 027**
**DE-B-1 063 671**
**FR-A-1 098 836**
**FR-A-1 405 164**
**GB-A-2 077 881**

(73) Patentinhaber: **Feramatic AG, CH- 8340 Hinwil (CH)**

(72) Erfinder: **Reist, Walter, Schönenbergstrasse 16,**
**CH- 8340 Hinwil (CH)**

(74) Vertreter: **Patentanwälte Schaad, Balass &**
**Partner, Dufourstrasse 101 Postfach, CH- 8034**
**Zürich (CH)**

## Beschreibung

Die vorliegende Erfindung betrifft eine Vorrichtung zum Verbinden von jeweils zwei von wenigstens drei Stationen gemäss Oberbegriff des Anspruchs 1.

Bei bekannten Rohrpostanlagen, bei denen die verschiedenen Stationen mittels einer als Führung dienenden Rohrleitung miteinander verbunden sind, wird die Verbindung zwischen jeweils zwei Stationen dadurch hergestellt, dass ein den zu übermittelnden Gegenstand, z.B. einen Informationsträger, enthaltender Behälter mittels Druck - oder Saugluft durch die Rohrleitung von der Aufgabe - zur Empfangsstation befördert wird. Mittels einer Zielsteuerung wird sichergestellt, dass der Behälter zur gewünschten Empfangsstation gelangt. Will nun diese Empfangsstation aufgrund der erhaltenen Information mit der Aufgabestation in Verbindung treten, so muss an der Empfangsstation ein einen entsprechenden Informationsträger enthaltender Behälter mit der Aufgabestation als Zielstation aufgegeben werden.

Bei diesen Anlagen besteht nach der Verbindungsaufnahme zwischen den beiden Stationen keine dauernde Verbindung. Zwischen zwei Stationen ist daher nur ein paketweiser Dialog möglich, wobei zwischen den einzelnen Paketen unter Umständen beträchtliche zeitliche Abstände bestehen.

Der vorliegenden Erfindung liegt nun die Aufgabe zugrunde, eine Vorrichtung der eingangs genannten Art zu schaffen, welche es bei einfachem Aufbau ermöglicht, wahlweise zwischen zwei von mehreren Stationen während herzustellen.

Diese Aufgabe wird erfindungsgemäss durch die Merknale des kennzeichnenden Teils des Anspruches 1 gelöst.

Durch Verschieben der Kugelgelenk-Gliederkette in der Führung in eine von verschiedenen Stellungen wird über diese Kette zwischen zwei ausgewählten Stationen ein ununterbrochener Verbindungsweg hergestellt. Ueber den Durchlass in der Kugelgelenk-Gliederkette bzw. über ein in diesem Durchlass angeordnetes Uebertragungselement kann nun zwischen diesen zwei Stationen während der gewünschten Zeit in beiden Richtungen ein Informationsaustausch oder eine andersartige Uebertragung erfolgen. Da der Verbindungsweg während der ganzen Zeit erhalten bleibt, ist ein direkter Dialog zwischen den beiden Stationen möglich.

Die Verwendung einer raumbeweglichen Kugelgelenk-Gliederkette ermöglicht einen im wesentlichen beliebigen Verlauf der Führung. Im weitern hat die Kugelgelenk-Gliederkette den Vorteil, dass auch beim Durchfahren von Kurven mit kleinem Radius der Durchlass nie unterbrochen wird.

Aus der FR-A-1.405.164 ist nun eine Vorrichtung zum Heben und Senken von Lasten bekannt, die (im Gegensatz zum Erfindungsgegenstand) eine Kreuzgelenkkette aufweist. Diese Kette dient in erster Linie zur Lastaufnahme und weist in ihrem Innern einen durchgehenden Kanal auf, in welchem Verbindungsleitungen und -rohre verlaufen. Ueber letztere erfolgt die Speisung von entweder an der Lastkette hängenden oder ortsfest angeordneten Bauteilen. Bei dieser bekannten Lasthebevorrichtung erfolgt somit kein wahlweises Verbinden von jeweils zwei von wenigstens drei Stationen.

Bevorzugte Weiterausbildungen der erfindungsgemässen Vorrichtung bilden Gegenstand der Ansprüche 2 bis 9.

Im folgenden wird anhand der Zeichnung ein Ausführungsbeispiel des Erfindungsgegenstandes näher erläutert. Es zeigt:

Fig. 1 in rein schematischer Darstellung eine Vorrichtung zum Herstellen einer Verbindung zwischen einer Hauptstation und jeweils einer von mehreren Zweitstationen, und

Fig. 2 in gegenüber Fig. 1 vergrössertem Maßstab einen Abschnitt des Führungskanals mit darin angeordneter Kugelgelenk-Gliederkette im Schnitt.

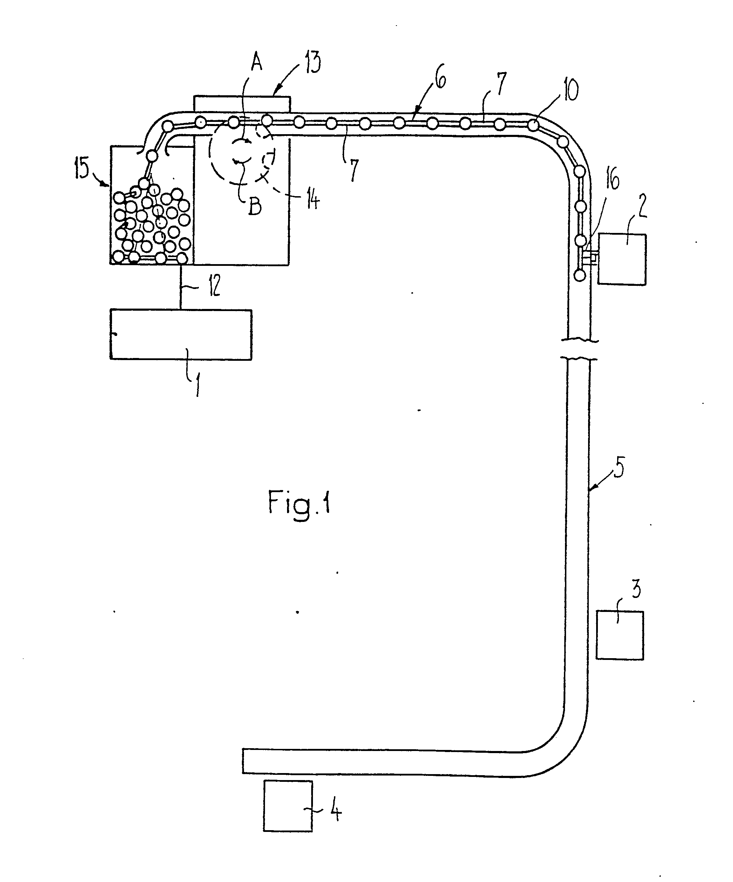

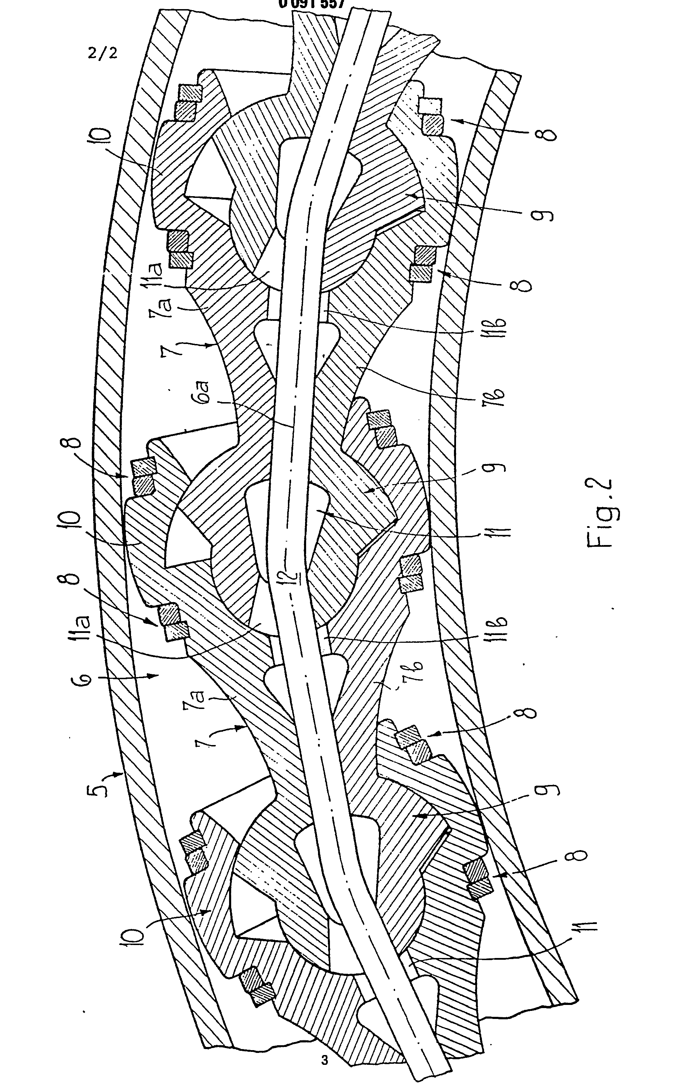

Bei der in Fig. 1 gezeigten Anlage sind vier örtlich voneinander getrennte Stationen 1, 2, 3, 4 vorhanden, die über einen Führungskanal 5 miteinander in Vorbindung stehen. Im Innern dieses Führungskanales 5 verläuft ein endlicher Strang einer Kugelgelenk-Gliederkette 6. Letztere ist von bekannter Bauart und in der DE-OS 31 21 835 bzw. der entsprechenden GB-OS 2 077 881 näher beschrieben. Aus diesem Grund wird die Konstruktion dieser Kette 6 anhand der Figur 2 nur kurz erläutert.

Die mit 7 bezeichneten Kettenglieder der Kugelgelenk-Gliederkette 6 bestehen aus zwei Hälften 7a und 7b, die miteinander durch Ringverbindungen 8 verbunden sind. Jedes Kettenglied 7 weist am einen Ende einen Kugelgelenkkörper 9 und am andern Ende eine Kugelgelenkpfanne 10 auf, in der der Kugelgelenkkörper 9 des benachbarten Kettengliedes 7 gehalten ist. Die Kugelgelenk-Gliederkette 6 weist einen sich entlang ihrer Längsachse 6a erstreckenden, kanalförmigen Durchlass 11 auf. In diesem Durchlass 11 verläuft ein elektrischer Leiter in Form eines Kabels 12.

Wie die Figur 1 weiter zeigt, ist zum Verschieben der Kugelgelenk-Gliederkette 6 im Führungskanal 5 ein Antrieb 13 vorhanden, der ein nur schematisch dargestelltes Kettenrad 14 aufweist, das ein gegengleich zum Kettenprofil geformtes Aussenprofil aufweist. Die Kettenglieder 7 greifen formschlüssig in das Aussenprofil des Kettenrades 14 ein. Letzteres ist auf nicht näher dargestellte Weise in entgegengesetzten Drehrichtungen A und B antreibbar. Der Antrieb 13 kann beispielsweise auf die in der schweizerischen Patentanmeldung Nr. 6 620/81 beschriebene Art ausgebildet sein.

An den sich beim gezeigten Ausführungsbeispiel im Bereich der Hauptstation 1 befindlichen Antrieb 13 schliesst ein Magazin 15 für die Kugelgelenk-Gliederkette 6 an. Dieses Magazin 15 kann beispielsweise wie in der CH-PS 626 027 bzw. der entsprechenden US-PS 4 151 754 beschrieben ausgebildet sein. An ihrem vorderen, freien Ende ist die Kugelgelenk-Gliederkette 6 mit einem nicht näher dargestellten Kopplungsorgan 16 versehen das mit dem Kabel 12 verbunden ist. Dieses Kopplungsorgan 16. erstreckt sich durch einen nicht näher dargestellten Längsschlitz im Führungskanal 5 und dient dazu, zwischen dem Kabel 12 und einer der Zielstationen 2, 3 bzw. 4 eine Verbindung herzustellen. Am dem Kopplungsteil 16 gegenüberliegenden Ende ist das Kabel 12 mit der Hauptstation 1 dauernd verbunden.

Im weitern ist eine nicht näher dargestellte Antriebssteuerung vorhanden, die so ausgebildet ist, dass der Antrieb 13 die Kugelgelenk-Gliederkette 6 zwischen verschiedenen Stellungen verschieben kann, in denen sich das Kopplungsorgan 16 jeweils an einer der Zielstationen 2, 3 oder 4 befindet. Dies kann beispielsweise dadurch erfolgen, dass die Antriebssteuerung die Grösse der jeweils vorgeschobenen bzw. zurückbewegten Länge der Kugelgelenk-Gliederkette 6 erfasst und diesen Istwert mit einem vorgegebenen Sollwert vergleicht. Sobald dieser Istwert dem Sollwert entspricht, wird der Antrieb 16 gestoppt. Im weitern ist es denkbar, am vorderen, freien Ende der Kugelgelenk-Gliederkette 6 ein Erkennungsorgan einer Zielsteuerung anzubringen, das der Antriebssteuerung zurückmeldet, wenn das freie Ende der Kugelgelenk-Gliederkette die gewählte Zielstation 2, 3 oder 4 erreicht hat.

In der Figur 1 ist die Kugelgelenk-Gliederkette 6 in einer Stellung gezeigt, in der eine Verbindung zwischen der Hauptstation 1 und der Zielstation 2 hergestellt ist. Ueber das Kabel 12 und das Kopplungsorgan 16 können nun von der Station 1 zur Station 2 und umgekehrt elektrische Signale übermittelt werden. Dabei bleibt der Verbindungsweg zwischen den Stationen 1 und 2 solange bestehen, als sich die Kugelgelenk-Gliederkette 6 in der in der Figur 1 gezeigten Stellung befindet.

Wird nun eine Verbindungsaufnahme zwischen den Stationen 1 und 3 oder 1 und 4 gewünscht, so wird die Kugelgelenkkette 6 mittels des Antriebes 13 vorgeschoben, bis das Kopplungsorgan 16 die Station 3 bzw. 4 erreicht hat. In der entsprechenden Stellung der Kugelgelenk-Gliederkette 6 ist dann eine Signalübertragung zwischen den Stationen 1 und 3 bzw. 1 und 4 möglich.

Es ist auch denkbar, die Kugelgelenk-Gliederkette 6 mit einem oder mehreren weiteren Kopplungsorganen 16 zu versehen, die in einem Abstand voneinander angeordnet sind, der dem Abstand zwischen den Zielstationen 2, 3 und 4 entspricht. Bei einer solchen Anordnung wäre es dann beispielsweise möglich, in einer entsprechenden Stellung der Kugelgelenk-Gliederkette 6 zwei oder alle drei Zielstationen 2, 3, 4 gleichzeitig mit der Hauptstation 1 zu verbinden.

Das Kabel 12 muss nicht notwendigerweise dauernd mit einer Station verbunden sein, wie das beim gezeigten Ausführungsbeispiel der Fall ist. So könnte beispielsweise die Verbindung zwischen jeder Station und dem Kabel 12 über ein Kopplungsorgan 16 erfolgen.

Es sind noch verschiedene weitere Varianten der gezeigten Vorrichtung möglich, von denen im folgenden nur noch einige kurz erwähnt werden.

Anstelle eines endlichen Stranges kann auch eine endlose Kugelgelenk-Gliederkette 6 verwendet werden, die in einem in sich geschlossenen Führungskanal 5 geführt wird, wie das beispielsweise in der CH-PS 621 183 bzw. der entsprechenden GB-PS 1 583 805 beschrieben ist.

Der Führungskanal 5 kann auch mehrere Zweige aufweisen, die mittels eines Weichensystemes wahlweise zu- und wegschaltbar sind, wie das in der CH-PS 626 027 bzw. der entsprechenden US-PS 4 151 754 und der CH-PS 623 283 bzw. der entsprechenden GB-PS 1 585 368 näher erläutert ist.

Die Kugelgelenk-Gliederkette kann selbstverständlich auch anders als wie gezeigt ausgebildet sein, beispielsweise auf die aus der DE-PS 22 20 259 bzw. der entsprechenden US-PS 3 757 514 bekannte Weise.

Anstelle eines elektrischen Kabels kann im Durchlass 11 der Kugelgelenk-Gliederkette 6 auch ein Lichtleiter vorgesehen werden, über den sich auf bekannte Weise Lichtsignale übertragen lassen. Daneben ist es auch möglich, im Durchlass 11 einen Hohlleiter anzuordnen, über den sich flüssige und gasförmige Medien sowie pulver- oder staubförmige oder körnige Güter übertragen lassen. Im weitern wäre es auch denkbar, über einen solchen Hohlleiter geeignete Stückgüter zu transportieren. Bei einer gas- bzw. flüssigkeitsdichten Ausgestaltung des Durchlasses 11 könnte in gewissen Fällen darauf verzichtet werden, diesen Durchlass 11 durch einen Hohlleiter auszukleiden.

Um zu vermeiden, dass der Leiter 12 beim Ausbiegen der Kugelgelenk-Gliederkette 6 zu stark zusammengedrückt oder beschädigt wird, ist der Durchlass 11 an den beiden Enden jedes Kettengliedes 7 erweitert. Zu diesem Zweck ist sowohl an jedem Kugelgelenkkörper 9 wie auch an jeder Kugelgelenkpfanne 10 ein Kanalabschnitt 11a bzw. 11b mit grösserem Querschnitt vorhanden. Wie die Fig. 2 zeigt, ist dabei der Kanalabschnitt 11a in den Kugelgelenkkörpern 9 sich gegen die zugeordnete Kugelgelenkpfanne 10 hin konisch erweiternd ausgebildet, während die Kanalabschnitte 11b in den Kugelgelenkpfannen 10 eine zylindrische Form haben.

**Patentansprüche**

1. Vorrichtung zum Verbinden von jeweils zwei von wenigstens drei Stationen (1 - 4), die durch eine kanalförmige Führung (5) untereinander verbunden sind, dadurch gekennzeichnet, dass in der Führung (5) eine Kugelgelenk-Gliederkette (6) geführt ist, die in ihrem Inneren einen sich entlang ihrer Längsachse (6a) erstreckenden Durchlass (11) aufweist und die mittels eines Antriebes (13) zwischen verschiedenen Stellungen verschiebbar ist, in denen sich die Kugelgelenk-Gliederkette (6) jeweils zumindest zwischen den beiden zu verbindenden Stationen (1 - 4) erstreckt und dass die Kugelgelenk-Gliederkette (6) wenigstens ein Kopplungsorgan (16) zum Herstellen einer Verbindung zwischen diesen Stationen (1 - 4) und dem Durchlass (11) bzw. einem in letzterem verlaufenden Uebertragungselement (12) aufweist.

2. Vorrichtung nach Anspruch 1, dadurch gekennzeichnet, dass im Durchlass (11) der Kugelgelenk-Gliederkette (6) ein vorzugsweise flexibles Uebertragungselement (12) zum Uebertragen von Information, strömungsfähigen Medien, Stückgütern und dgl. verläuft.

3. Vorrichtung nach Anspruch 2, dadurch gekennzeichnet, dass das Uebertragungselement (12) ein elektrischer Leiter, ein Lichtleiter oder ein rohrförmiger Kanal ist.

4. Vorrichtung nach einem der Ansprüche 1 bis 3, dadurch gekennzeichnet, dass der Durchlass (11) der Kugelgelenk-Gliederkette (6) bzw. das in diesem angeordnete Uebertragungselement (12) dauernd mit einer Station (1) in Verbindung steht.

5. Vorrichtung nach einem der Ansprüche 1 bis 4, dadurch gekennzeichnet, dass die Kugelgelenk-Gliederkette (6) als endlicher Strang ausgebildet ist.

6. Vorrichtung nach Anspruch 5, dadurch gekennzeichnet, dass ein an die Führung (5) angeschlossenes Magazin (16) zur Aufnahme der Kugelgelenk-Gliederkette (6) vorgesehen ist.

7. Vorrichtung nach einem der Ansprüche 1 bis 4, gekennzeichnet durch eine endlose Kugelgelenk-Gliederkette (6).

8. Vorrichtung nach einem der Ansprüche 1 bis 7, dadurch gekennzeichnet, dass die Kugelgelenk-Gliederkette (6) durch den Antrieb (13) in entgegengesetzten Richtumgen (A, B) antreibbar ist.

9. Vorrichtung nach einem der Ansprüche 1 bis 8, dadurch gekennzeichnet, dass die Führung wenigstens zwei Zweige aufweist, von denen mittels einer Weiche wahlweise jeweils ein Zweig wählbar ist.

## Claims

1. Device for connecting in each case two of at least three stations (1 - 4) which are connected to one another by a channel-shaped guide (5), characterized in that a ball-jointed link chain (6) is guided in the guide (5), which ball-jointed link chain (6), in the inside thereof, has a passage (11), extending along its longitudinal axis (6a), and which can be displaced by means of a drive (13) betveen various positions in which the ball-jointed link chain (6) extends in each case at least between the two stations (1 - 4) to be connected, and that the ball-jointed link chain (6) has at least one coupling member (16) for making a connection between these stations (1 - 4) and the passage (11) or a transmission element (12) running in the latter.

2. Device according to claim 1, characterized in that a preferably flexible transmission element (12) for transmitting information, flowable media, individual articles and the like runs in the passage (11) of the ball-jointed link chain (6).

3. Device according to claim 2, characterized in that the transmission element (12) is an electrical conductor, an optical light guide or a tubular channel.

4. Device according to one of claims 1 to 3, characterized in that the passage (11) of the ball-jointed link chain (6) or the transmission element (12) arranged in this passage (11) is in continuous connection with a station (1).

5. Device according to one of claims 1 to 4, characterized in that the ball-jointed link chain (6) is made as a finite strand.

6. Device according to claim 5, characterized in that a magazine (16) connected to the guide (5) is provided for accommodating the ball-jointed link chain (6).

7. Device according to one of claims 1 to 4, characterized by an endless ball-jointed link chain (6).

8. Device according to one of claims 1 to 7, characterized in that the ball-jointed link chain (6) can be driven in opposite directions (A, B) by the drive (13).

9. Device according to one of claims 1 to 8, characterized in that the guide has at least two branches, of which in each case one branch can be selected by means of a router.

## Revendications

1 - Dispositif pour établir chaque fois une liaison entre deux postes d'un réseau comportant au moins trois postes (1 à 4) qui sont reliés entre eux par un guide (5) en forme de canal, cacactérisé en ce que dans le guide (5) est guidée une chaîne (6) à maillons à articulations sphériques qui présente intérieurement un passage (11) s'étendant le long de son axe longitudinal (6a) et qui peut être amenée au moyen d'un mécanisme de d'entraînement (13) à coulisser entre différentes positions dans lesquelles la chaîne (6) à maillons à articulations sphériques s'étend chaque fois au moins entre les deux postes (1 à 4) à relier entre eux et en ce que la chaîne (6) à maillons à articulations sphériques comporte au moins un organe de liaison (16) pour établir une liaison entre ces postes (1 à 4) et soit le passage (11), soit un organe de transmission (12) s'étendant dans ce dernier.

2 - Dispositif selon la revendication 1, caractérisé en ce que dans le passage (11) de la chaîne (6) à maillons à articulations sphériques s'étend un organe de transmission de préférence flexible (12) pour transmettre ou transporter de l'information, des fluides aptes à s'écouler, des articles individuels et analogues.

3 - Dispositif selon la revendication 2, caractécisé en ce que l'organe de transmission (12) est un conducteur électrique, un conducteur de lumière ou un canal tubulaire.

4 - Dispositif selon l'une quelconque des revendications précédentes, caractérisé en ce que le passage (11) de la chaîne (6) à maillons à articulations sphériques ou l'organe de transmission (12) monté dans cette dernière se trouve en permanence en communication avec un poste.

5 - Dispositif selon l'une quelconque des revendications précédentes, caractérisé en ce que la chaîne (6) à maillons à articulations sphériques est réalisée sous la forme d'un tronçon limité.

6 - Dispositif selon la revendication 5, caractérisé en ce qu'un magasin (15) associé au guide (5) est prévu pour recevoir la chaîne (6) à maillons à articulations sphériques.

7 - Dispositif selon l'une quelconque des revendications 1 à 4, caractérisé par une chaîne (6) à maillons à articulations sphériques sans fin.

8 - Dispositif selon l'une quelconque des revendications précédentes, caractérisé en ce que la chaîne (6) à maillons à articulations sphériques peut être entraînée dans des sens opposés (A, B) par le mécanisme d'entraînement (13).

9 - Dispositif selon l'une quelconque des revendications précédentes, caractérisé en ce que le guide présente au moins deux branches l'une desquelles peut chaque fois être choisie au moyen d'un aiguillage.

Fig.1

Fig.2

0 091 557